# EUROPÄISCHE PATENTSCHRIFT

(11) **EP 1 937 978 B1**
(45) Veröffentlichungstag und Bekanntmachung des Hinweises auf die Patenterteilung: **11.11.2009**
(21) Anmeldenummer: 06793354.9
(22) Anmeldetag: 08.09.2006
(51) Int. Cl.: F04D 25/06, F04D 25/08

(54) **KÜHLERLÜFTER FÜR EIN KRAFTFAHRZEUG**
COOLING FAN FOR A MOTOR VEHICLE
VENTILATEUR DE RADIATEUR POUR UN VEHICULE A MOTEUR

(30) Priorität: 14.10.2005 DE 102005049261
(43) Veröffentlichungstag der Anmeldung: 02.07.2008
(73) Patentinhaber: Brose Fahrzeugteile GmbH & Co. KG, Würzburg, 97076 Würzburg (DE)
(72) Erfinder: De Filippis, Pietro, I-20124 Milano (IT); Redelberger, Harald, 97273 Kürnach (DE)
(74) Vertreter: Reinhard - Skuhra - Weise & Partner GbR
(86) Internationale Anmeldenummer: PCT/EP2006/066170
(87) Internationale Veröffentlichungsnummer: WO 2007/042362

(56) Entgegenhaltungen:
- EP-A- 0 521 285
- EP-A- 0 569 738
- DE-A1- 1 488 640
- DE-A1- 19 945 016
- DE-U1- 9 404 147

## Beschreibung

Die Erfindung betrifft einen Kühlerlüfter für ein Kraftfahrzeug, mit einem Lüfterrad und mit einem bürstenlosen Lüftermotor zum Antrieb des Lüfterrades, wobei der Lüftermotor einen Innenläufer aufweist.

Im Automobilbereich ist der Einsatz von bürstenlosen Lüftermotoren bekannt. Diese werden u.a. für Kühlerlüfter zur Kühlung des Verbrennungsmotors und für Kühlerlüfter für Klimaanlagen und Innenraumbelüftungen verwendet.

Bei bekannten bürstenlosen Lüftermotoren mit Innenläufern sind sowohl Läufer und Ständer als auch die Motorelektronik in einem Gehäuse zwischen einem vorderen und einem hinteren Lagerschild eingeschlossen. Das Lüfterrad ist außerhalb des Gehäuses angeordnet und mit dem Lüftermotor über die Antriebswelle verbunden. Die Antriebswelle wird dabei in dem vorderen und dem hinteren Lagerschild des Gehäuses geführt.

Die deutsche Gebrauchsmusterschrift 94 04147 U1, die als nächstliegender Stand der Technik augesehen wird offenbart einen Axiallüfter, bei dem das Lüfterrad direkt mit einem als Innenläufer ausgebildeten Rotor des Lüfters verbunden ist. An der dem Lüfterrad entgegengesetzt angeordneten Stirnseite des Rotors ist zur Erzeugung eines Luftstromes durch einen von Stator und Rotor gebildeten Luftspalt ein zusätzliches, kleineres Lüfterrad vorgesehen, wodurch die Wicklungen des Rotors und des Stators gekühlt und Feuchtigkeitsablagerungen im Luftspalt des Motors vermieden werden.

Die deutsche Offenlegungsschrift DE 42 14 160 A1 beschreibt einen Lüfter, bei dem das Lüfterrad den Rotor des Antriebs trägt, ohne das dabei eine Antriebswelle verwendet wird.

Eine Aufgabe der vorliegenden Erfindung ist es, die Baugröße eines Kühlerlüfter bei gleicher Leistung zu verringern.

Diese Aufgabe wird durch einen Kühlerlüfter nach Anspruch 1 gelöst. Danach ist vorgesehen: ein Kühlerlüfter für ein Kraftfahrzeug, mit einem Lüfterrad und mit einem bürstenlosen Lüftermotor zum Antrieb des Lüfterrades, wobei der Lüftermotor einen Innenläufer aufweist, wobei das Lüfterrad eine Lüfternabe aufweist und die Lüfternabe direkt mit dem Innenläufer verbunden ist und wobei die Lüfternabe an ihrer dem Innenläufer zugewandten Innenseite eine Anzahl von Lüfterblättern aufweist. Erfindungsgemäß sind die Lüfterblätter in zwei Gruppen angeordnet, wobei die eine Gruppe vorwiegend zur Erzeugung eines Luftstromes durch einen offenen Zentralbereich des Innenläufers dient, während die andere Gruppe vorwiegend zur Erzeugung eines Luftstromes durch die Nutenschlitze des Ständers dient.

Durch diese konstruktive Ausgestaltung wird zum einen eine deutliche Verringerung der axialen Baulänge erzielt. Ein vorderes Lagerschild wird nicht benötigt. Da der Antrieb des Lüfterrades direkt über den Innenläufer erfolgt, wird keine Antriebswelle benötigt. Statt dessen kann zur Halterung des Innenläufers eine Führungsachse vorgesehen sein.

Darüber hinaus wird durch die Erfindung das Gewicht des Lüftermotors und damit des gesamten Kühlerlüfters verringert. Zugleich ergibt sich eine Reduzierung der Herstellungs- und Montagekosten sowie - durch die Verringerung der Teileanzahl - eine Erhöhung der Zuverlässigkeit.

Zudem ermöglicht die Erfindung trotz der reduzierten Baugröße des Kühlerlüfters eine deutlich verbesserte Wärmeabfuhr von Lüftermotor und Motorelektronik. Durch die verringerte Baulänge verkürzen sich die Wege, welche die Kühlluft im Inneren des Lüftermotors zurückzulegen haben. Dadurch verringert sich der Druckabfall, so dass die Effektivität der Kühlung durch erzwungene Wärmekonvektion erhöht wird.

Aufgrund der direkten Verbindung des Lüfterrades über seine Lüfternabe mit dem Innenläufer ist eine maximale Verringerung der axialen Baulänge des Kühlerlüfters möglich. So läßt sich eine besonders kompakte Bauform erreichen.

Um eine direkte Anbindung des Lüfterrades zu ermöglichen, ist ein in Richtung Lüfterrad offenes Gehäuse vorgesehen. Da kein vorderes Lagerschild das Gehäuse abschließt, ist eine unmittelbare Kühlung von in dem Gehäuse angeordneten Bauteilen (Wicklungen etc.) möglich. Hierzu weist die Lüfternabe an ihrer dem Innenläufer zugewandten Innenseite eine Anzahl von Lüfterblättern auf.

Durch die Anordnung der Lüfterblätter in zwei Gruppen wird eine besonders effektive Kühlung der Motorelektronik in dem Gehäuse einerseits und eine Kühlung der Wicklungen andererseits und damit eine verbesserte Eigenkühlung des Lüftermotors erreicht.

Mit Hilfe der Erfindung können Kühlerlüfter für Anwendungen im Automobilbereich bereitgestellt werden, die im Hinblick auf Leistung, Zuverlässigkeit und Effizienz gegenüber den aus dem Stand der Technik bekannten Lösungen verbessert sind.

Vorteilhafte Ausgestaltungen der Erfindung sind in den Unteransprüchen angegeben.

Sind die beiden Gruppen von Lüfterblättern derart voneinander beabstandet, dass sie die axial aus dem Ständer herausstehenden Einzelzahnbewicklungen aufnehmen können, läßt sich die axiale Baulänge nochmals verringern.

Für eine Führung der beiden Kühlluftströme besonders vorteilhaft ist es darüber hinaus, wenn die eine Gruppe von Lüfterblättern nahe der Führungsachse angeordnet und die Lüfterblätter dabei entgegen der Drehrichtung gebogen ausgeführt sind, während die andere Gruppe von Lüfterblättern am Nabenumfang angeordnet und gerade ausgeführt sind.

Konstruktiv vorteilhafte Ausführungen umfassen: einen Innenläufer mit einer Führungsöffnung zur Aufnahme der Führungsachse, die in einem hinteren Lagerschild eines Gehäuses gelagert ist; eine Lagerung der Führungsachse in bzw. an dem Innenläufer in Verbindung mit einer Festlegung der Führungsachse in einem Gehäuse sowie eine Lagerung der Führungsachse in bzw. an der Lüfternabe in Verbindung mit einer Festlegung der Führungsachse in einem Gehäuse.

Für eine besonders sicher Lagerung der Führungsachse werden dabei vorzugsweise zwei Kugellager, ein Kugellager und ein Gleitlager oder zwei Gleitlager verwendet.

Die Erfindung wird nachfolgend anhand eines Ausführungsbeispieles beschrieben, das mit Hilfe von Zeichnungen näher erläutert wird. Hierbei zeigen:
- FIG 1: eine schematische Schnittdarstellung eines Kühlerlüfters mit einem Lüftermotor mit Innenläufer nach dem Stand der Technik,
- FIG 2: eine schematische Schnittdarstellung eines Kühlerlüfters mit einem Lüftermotor mit Innenläufer nach der Erfindung,
- FIG 3: eine erste Explosionsdarstellung eines erfindungsgemäßen Kühlerlüfters (schräg von vorn),
- FIG 4: eine zweite Explosionsdarstellung eines erfindungsgemäßen Kühlerlüfters (schräg von hinten),
- FIG 5: eine Draufsicht auf ein Gehäuse eines erfindungsgemäßen Kühlerlüfters,
- FIG 6: eine Schnittdarstellung eines erfindungsgemäßen Kühlerlüfters entlang der Linie AA in FIG 5,
- FIG 7: eine Schnittdarstellung eines Ständers und eines Innenläufers gemäß der Erfindung entlang der Linie BB in FIG 6, und
- FIG 8: eine Draufsicht auf die Innenseite der Lüfternabe des Lüfterrades des erfindungsgemäßen Kühlerlüfters.

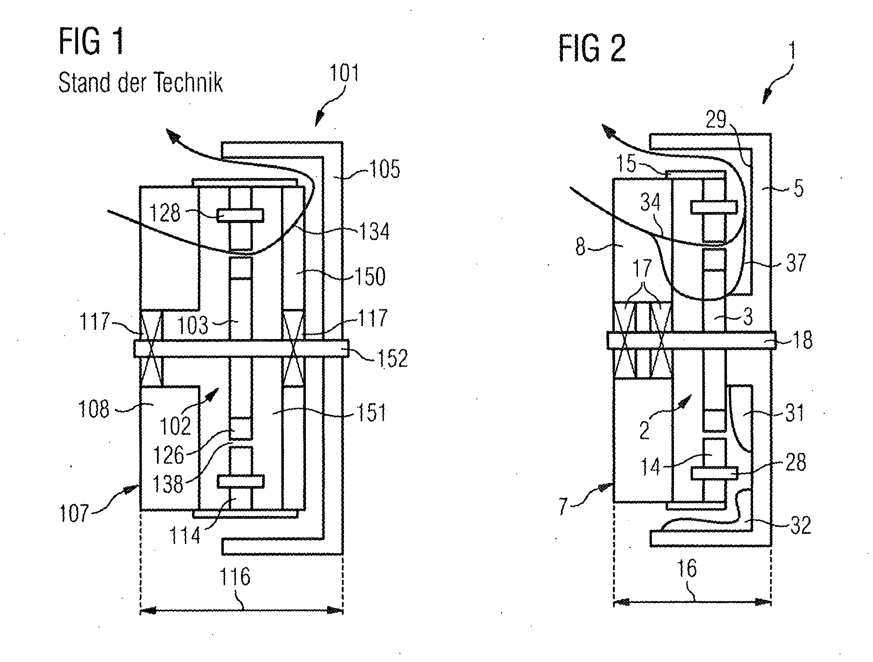

In FIG 1 ist ein aus dem Stand der Technik bekannter Kühlerlüfter 101 dargestellt, der einen Lüftermotor 102 mit einem Innenläufer 103 aufweist. Das Aluminiumgehäuse 107, das zugleich als Kühlelement dient, weist ein vorderes Lagerschild 150 und ein hinteres Lagerschild 108 auf, die einen abgeschlossenen Innenraum 151 zur Aufnahme des Ständers 114 und des Innenläufers 103 bilden. In dem hinteren Lagerschild 108 ist die Motorelektronik angeordnet. Sowohl in dem vorderen Lagerschild 150 als auch in dem hinteren Lagerschild 108 sind Lager 117 zur Lagerung einer Antriebswelle 152 vorgesehen. Mit der Antriebswelle 152 verbunden ist der Innenläufer 103 mit Permanentmagneten 126. Der Ständer 114 weist eine Kupfer-Bewicklung 128 auf. An der aus dem vorderen Lagerschild 150 herausragenden Antriebswelle 152 ist die Lüfternabe 105 des Lüfterrades befestigt. Die Übertragung des Drehmomentes von dem Lüftermotor 102 auf das Lüfterrad erfolgt über die Antriebswelle 152. Der Kühlluftstrom 134 verläuft entlang der Motorelektronik, durch die Nutenschlitze 138 des Ständers 114 hindurch und durch Öffnungen in dem vorderen Lagerschild 150 ins Freie. Die axiale Baulänge 116 wird durch die Baulängen von hinterem Lagerschild 108, Ständer 114 bzw. Innenläufer 103, vorderem Lagerschild 150 und Lüfternabe 105 sowie die zugehörigen Zwischenräume bestimmt.

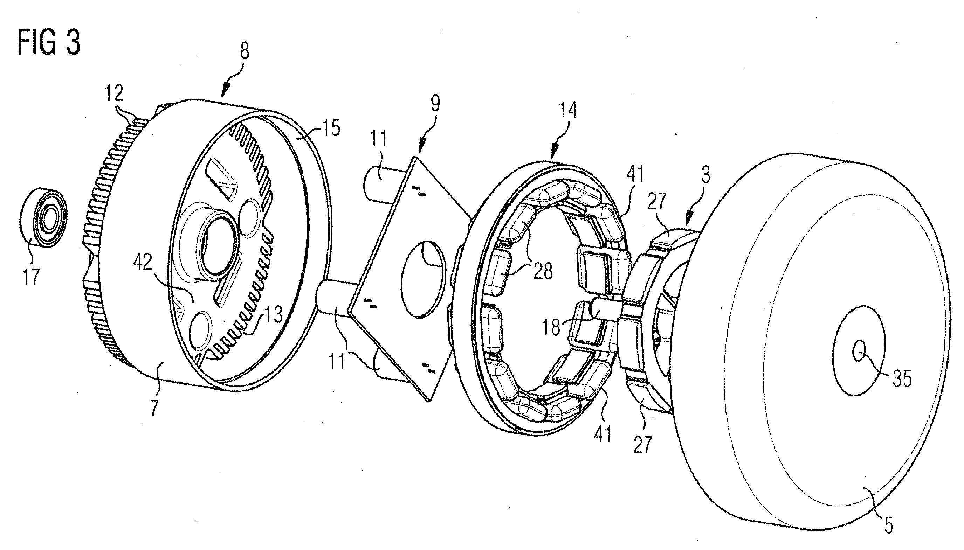

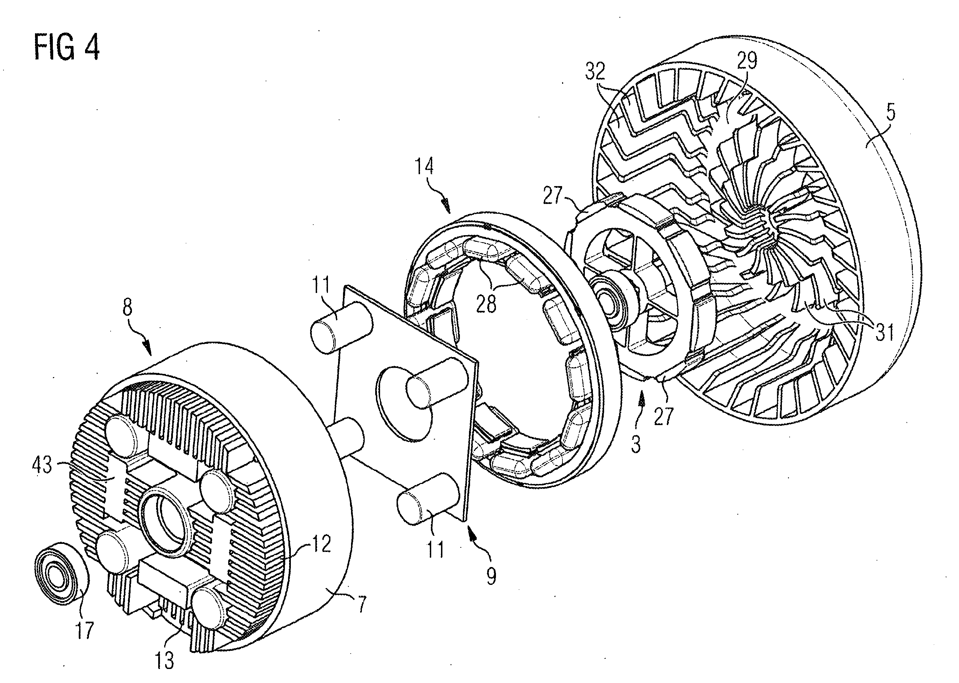

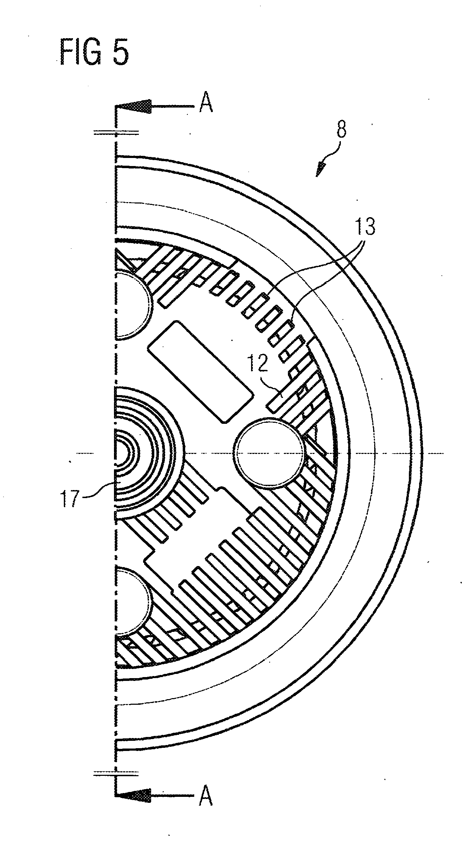

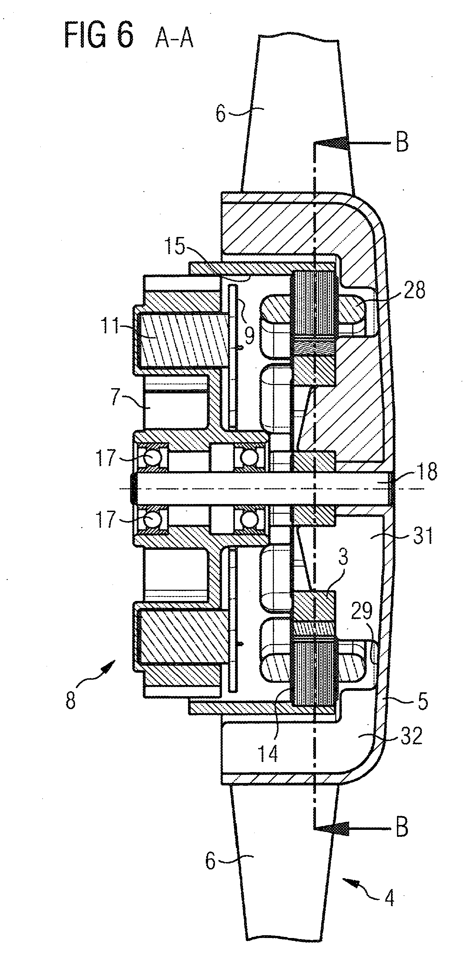

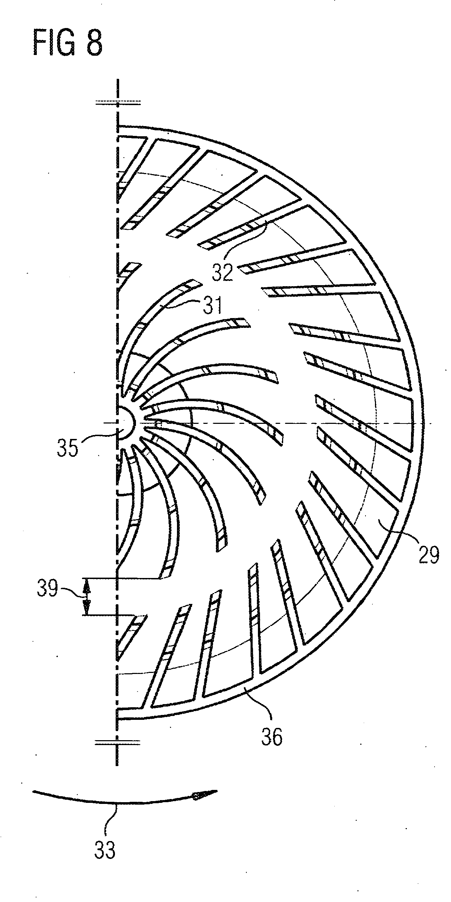

In den FIG 2 bis 8 ist ein Ausführungsbeispiel der Erfindung abgebildet. Der dargestellte Kühlerlüfter 1 weist einen Lüftermotor 2 mit einem Innenläufer 3 auf. Das Lüfterrad 4 weist eine Lüfternabe 5 und eine Anzahl von sich radial von der Lüfternabe 5 nach außen weg erstreckenden Lüfterblättern 6 auf. Es kann beispielsweise als Axiallüfter ausgebildet sein.

Das als Kühlelement dienende Aluminiumgehäuse 7 besteht im Wesentlichen aus einem hinteren Lagerschild 8, in dem die Motorelektronik 9 mit Bauteilen wie Elektrolytkondensatoren 11, MOSFETs, Prozessor usw., angeordnet ist. Das Lagerschild 8 ist mit einer Vielzahl von Kühlrippen 12 und Durchtrittsöffnungen 13 für Kühlluft versehen. Diese dienen der Wärmeabfuhr durch Wärmeleitung, Wärmestrahlung und Wärmekonvektion.

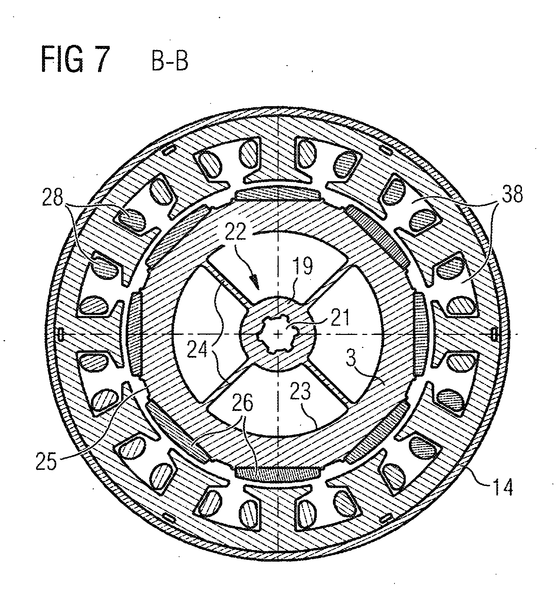

Ein Ständer 14 ist an einem Haltering 15 befestigt, der als integraler Bestandteil des Gehäuses 7 ausgebildet ist (vgl. FIG 7) und sich von der Lagerschild 8 in Richtung Lüfterrad 4 erstreckt. In Richtung der Lüfternabe 5 des Lüfterrades 4 ist das Gehäuse 7 offen. Der Ständer 14 und der Innenläufer 3 sind somit ohne ein trennendes Gehäuseteil unmittelbar benachbart zu dem Lüfterrad 4 angeordnet.

Die Lüfternabe 5 ist direkt mit dem Innenläufer 3 verbunden. Die Übertragung des Drehmomentes erfolgt somit direkt von dem Innenläufer 3 auf das Lüfterrad 4. Die axiale Baulänge 16 des Kühlerlüfters 1 ist dadurch gegenüber der in FIG 1 dargestellten Lösung deutlich verringert. Zugleich sind die Herstellungskosten niedriger als bei herkömmlichen Innenläufer-Lösungen, da weder eine mechanisch hoch belastbare Befestigung des Innenläufers 3 an einer Antriebswelle, noch eine mechanisch hoch belastbare Befestigung des Lüfterrades 4 an der Antriebswelle erforderlich ist.

Die Verbindung der Lüfternäbe 5 mit dem Innenläufer 3 kann auf verschiedene Art und Weise erfolgen, beispielsweise durch Verschrauben, Einspritzen, Aufpressen durch Herstellen einer Preßpassung oder dergleichen.

In dem hinteren Lagerschild 8 sind zwei zentral angeordnete Kugellager 17 zur Lagerung einer Führungsachse 18 vorgesehen. Der Führungsachse 18 ist keine Antriebsfunktion zugewiesen. Die Führungsachse 18 dient zur Führung des Innenläufers 3 und der Lüfternabe 5. Alternativ dazu kann auch eine andere Lagerkonfiguration verwendet werden, beispielsweise unter Verwendung eines Kugellagers und eines Gleitlagers oder unter Verwendung zweier Gleitlager. Alternativ können die oder das Lager auch in bzw. an dem Innenläufer 3 vorgesehen sein, wobei die Führungsachse 18 dann in dem Gehäuse 7 festgelegt ist. Alternativ können die oder das Lager auch in bzw. an der Lüfternabe 5 vorgesehen sein, wobei die Führungsachse.18 wiederum in dem Gehäuse 7 festgelegt ist.

Der aus einer Anzahl von Eisenblechen aufgebaute Innenläufer 3 weist ein zentrales Führungselement 19 mit einer Führungsöffnung 21 zur Aufnahme der Führungsachse 18 auf. Das Führungselement 19 ist von einem Zentralbereich 22 umgeben, der offen ausgeführt und zum Durchtritt von Kühlluft geeignet ist. Der Zentralbereich 22 ist in einem Bereich des Innenläufers 3 angeordnet, der magnetisch nicht wirksam ist. Aufgrund des fehlenden Läufermaterials ergibt sich so eine zum Teil erhebliche Gewichtsverringerung des Innenläufers 3 bei gleicher Leistung des Lüftermotors 2.

Der Zentralbereich 22 ist von einem äußeren Ring 23 umgeben, der das eigentliche "Eisen" des Lüftermotors 2 bildet und mit dem zentralen Führungselement 19 über vier Halte- und Verbindungsstreben 24 verbunden ist. An dem Umfang 25 des äußeren Ringes 23 sind eine Anzahl von Permanentmagneten 26 in Gestalt von Brotlaibmagneten angeordnet derart, dass sich der magnetisch nicht wirksame Bereich im Inneren des Innenläufers 3 ergibt. Alternativ können auch Taschenmagnete verwendet werden. Bei den Permanentmagneten handelt es sich vorzugsweise um Seltenerdenmagnete. Diese sind mit dem äußeren Ring 23 durch eine Kunststoffumspritzung 27 verbunden. Der Ständer 14 weist eine Anzahl von Kupfer-Wicklungen 28 in Form von Einzelzahnbewicklungen auf.

Die sich topfartig um den Haltering 15 des Gehäuses 7 stülpende Lüfternabe 5 weist an ihrer dem Innenläufer 3 zugewandten Innenseite 29 eine Anzahl von Lüfterblättern 31, 32 auf, die derart angeordnet sind, dass sie bei einer Drehung des Lüfterrades 4 in Drehrichtung 33 Kühlluftströme erzeugen.

Dabei sind die Lüfterblätter 31, 32 in zwei Gruppen angeordnet. Die eine Gruppe von Lüfterblättern 31 ist nahe der Führungsachse 18 angeordnet und dient vorwiegend zur Erzeugung eines Luftstromes 34 durch den offenen Zentralbereich 22 des Innenläufers 3 und damit vor allem zur Kühlung der in Richtung Lüfterrad 4 offen im Lagerschild 8 angeordneten Motorelektronik 9. Die einzelnen Lüfterblätter 31 bilden dabei einen Radiallüfter. Sie sind entgegen der Drehrichtung 33 (also "rückwärts") gebogen ausgeführt und erstrecken sich ausgehend von der zentralen Führungsöffnung 35 der Lüfternabe 5 in Richtung des Nabenumfangs 36.

Die andere Gruppe von Lüfterblättern 32 ist von der Führungsachse 18 beabstandet am Nabenumfang 36 und entlang der topfartigen Verlängerung der Lüfternabe 5 angeordnet und dient vorwiegend zur Erzeugung eines Luftstromes 37 durch die Nutenschlitze 38 des Ständers 14. Dieser Kühlluftstrom dient zur direkten Kühlung der Wicklungen 28 des Ständers 14 und darüber hinaus auch zur Kühlung der Motorelektronik 9. Die einzelnen Lüfterblätter 32 sind dabei gerade ausgeführt und erstrecken sich ausgehend von dem Nabenumfang 36 in Drehrichtung 33 schräg nach innen. Um eine ausreichende Kühlung zu ermöglichen, sind die elektromagnetischen Eigenschaften des Lüftermotors 2 derart aufeinander abgestimmt, dass ein niedriger Füllgrad der Nuten vorliegt derart, dass eine für eine Kühlung ausreichender Kühlluftstrom durch die Nutenschlitze 38 hindurch strömen kann.

Die beiden Gruppen von Lüfterblättern 31, 32 sind voneinander beabstandet. Der Abstand 39 dient zur Aufnahme der Wicklungsenden 41 der Wicklungen 28 des Ständers 14. Damit wird die axiale Baulänge 16 des Kühlerlüfters 1 weiter verringert. Eine besonders hohe Kühlleistung wird wegen der dann erzielbaren höheren Luftgeschwindigkeiten dadurch erreicht, dass die Abstände zwischen den Wicklungen 28 und den angrenzenden Enden der Lüfterblätter 31, 32 sehr gering sind.

Durch die beiden Kühlluftströme 34, 37 wird eine gegenüber den bekannten Lösungen deutlich verbesserte Kühlung des Ständers 14 und der Motorelektronik 9 mit Hilfe von Wärmekonvektion erzielt. Die Kühlluftverluste sind aufgrund der kürzeren Wege nach außen minimiert. Darüber hinaus verringert sich durch die Erfindung die Anzahl der Bereiche, in denen Turbulenzen entstehen können, so dass sich insgesamt ein deutlich gleichmäßigerer Kühlluftstrom ergibt. Möglich wird dies dadurch, dass zwischen der Lüfternabe 5 mit ihren Lüfterblättern 31, 32 einerseits und den aktiven Motorteilen (Ständer 14 und Innenläufer 3) andererseits keinerlei Zwischenteile vorgesehen sind.

Die gesamte Motorelektronik 9 ist für eine einfache Montage an der der Lüfternabe 5 zugewandten Vorderseite 42 des Lagerschildes 8 angeordnet. Alternativ dazu kann die Motorelektronik 9 aus thermischen Gründen auch vollständig oder teilweise an der der Lüfternabe 5 abgewandten Rückseite 43 des Lagerschildes 8 angeordnet sein.

## Patentansprüche

1. Kühlerlüfter (1) für ein Kraftfahrzeug, mit einem Lüfterrad (4) und mit einem bürstenlosen Lüftermotor (2) zum Antrieb des Lüfterrades (4),
- wobei der Lüftermotor (2) einen Innenläufer (3) aufweist,
- wobei das Lüfterrad (4) eine Lüfternabe (5) aufweist und die Lüfternabe (5) direkt mit dem Innenläufer (3) verbunden ist,
- wobei die Lüfternabe (5) an ihrer dem Innenläufer (3) zugewandten Innenseite (29) eine Anzahl von Lüfterblättern (31, 32) aufweist,
**dadurch gekennzeichnet, dass** die Lüfterblätter (31, 32) in zwei Gruppen angeordnet sind, wobei die eine Gruppe vorwiegend zur Erzeugung eines Luftstromes (37) durch einen offenen Zentralbereich (22) des Innenläufers (3) dient, während die andere Gruppe vorwiegend zur Erzeugung eines Luftstromes (34) durch die Nutenschlitze (38) des Ständers (14) dient.

2. Kühlerlüfter (1) nach Anspruch 1, **dadurch gekennzeichnet, dass** die beiden Gruppen von Lüfterblättern (31, 32) zur Aufnahme von Wicklungsenden (41) der Wicklungen (28) des Ständers (14) voneinander beabstandet sind.

3. Kühlerlüfter (1) nach Anspruch 1 oder 2, **dadurch gekennzeichnet, dass** die eine Gruppe von Lüfterblättern (31) nahe der Führungsachse (18) angeordnet und die Lüfterblätter (31) entgegen der Drehrichtung (33) gebogen ausgeführt sind.

4. Kühlerlüfter (1) nach einem der Ansprüche 1 bis 3, **dadurch gekennzeichnet, dass** die andere Gruppe von Lüfterblättern (32) am Nabenumfang (36) angeordnet und gerade ausgeführt sind.

5. Kühlerlüfter (1) nach einem der Ansprüche 1 bis 4, **dadurch gekennzeichnet, dass** der Innenläufer (3) eine Führungsöffnung (21) zur Aufnahme der Führungsachse (18) aufweist und die Führungsachse (18) in einem hinteren Lagerschild (8) eines Gehäuses (7) gelagert ist.

6. Kühlerlüfter (1) nach einem der Ansprüche 1 bis 4, **dadurch gekennzeichnet, dass** die Führungsachse (18) in bzw. an dem Innenläufer (3) gelagert und in einem Gehäuse (7) festgelegt ist.

7. Kühlerlüfter (1) nach einem der Ansprüche 1 bis 4, **dadurch gekennzeichnet, dass** die Führungsachse (18) in bzw. an der Lüfternabe (5) gelagert und in einem Gehäuse (7) festgelegt ist.

8. Kühlerlüfter (1) nach einem der Ansprüche 5 bis 7, **dadurch gekennzeichnet, dass** zur Lagerung der Führungsachse (18) zwei Kugellager (17), ein Kugellager und ein Gleitlager oder zwei Gleitlager verwendet werden.

## Claims

1. Radiator fan (1) for a motor vehicle, with a fan wheel (4) and with a brushless fan motor (2) for driving the fan wheel (4),
- the fan motor (2) having an inner rotor (3),
- the fan wheel (4) having a fan hub (5), and the fan hub (5) being connected directly to the inner rotor (3),
- the fan hub (5) having a number of fan blades (31, 32) on its inside (29) facing the inner rotor (3),
**characterized in that** the fan blades (31, 32) are arranged in two groups, one group serving predominantly for generating an air stream (37) through an open central region (22) of the inner rotor (3), while the other group serves predominantly for generating an air stream (34) through the groove slots (38) of the stator (14).

2. Radiator fan (1) according to Claim 1,
**characterized in that** the two groups of fan
blades (31, 32) are spaced apart from one another in order to receive winding ends (41) of the windings (28) of the stator (14).

3. Radiator fan (1) according to Claim 1 or 2,
**characterized in that** one group of fan blades (31) is arranged near the guide shaft (18), and other fan blades (31) are designed so as to be bent opposite to the direction of rotation (33).

4. Radiator fan (1) according to one of Claims 1
to 3, **characterized in that** the other group of fan blades (32) is arranged on the hub circumference (36) and designed so as to be straight.

5. Radiator fan (1) according to one of Claims 1
to 4, **characterized in that** the inner rotor (3) has a guide orifice (21) for receiving the guide shaft (18), and the guide shaft (18) is mounted in a rear bearing plate (8) of a housing (7).

6. Radiator fan (1) according to one of Claims 1
to 4, **characterized in that** the guide shaft (18) is mounted in or on the inner rotor (3) and is secured in a housing (7).

7. Radiator fan (1) according to one of Claims 1
to 4, **characterized in that** the guide shaft (18) is mounted in or on the fan hub (5) and is secured in a housing (7).

8. Radiator fan (1) according to one of Claims 5
to 7, **characterized in that** two ball bearings (17), one ball bearing and one plain bearing, or two plain bearings, are used for mounting the guide shaft (18).

## Revendications

1. Ventilateur de refroidissement (1) prévu pour un véhicule automobile, doté d'une roue de ventilateur (4) et d'un moteur de ventilateur sans balais (2) destiné à entraîner la roue de ventilateur (4),
- le moteur de ventilateur (2) présentant un rotor intérieur (3),
- la roue de ventilateur (4) présentant un moyeu de ventilateur (5) et le moyeu de ventilateur (5) étant directement relié au rotor intérieur (3),
- le moyeu de ventilateur (5) présentant une quantité d'ailettes (31, 32) sur sa face intérieure (29) orientée vers le rotor intérieur (3),
**caractérisé par le fait que**
les ailettes (31, 32) sont disposées en deux groupes, un groupe servant principalement à produire un écoulement d'air (37) par une zone centrale ouverte (22) du rotor intérieur (3), tandis que l'autre groupe sert principalement à produire un écoulement d'air (34) par la fente de la rainure (38) du stator (14).

2. Ventilateur de refroidissement (1) selon la revendication 1, **caractérisé par le fait que** les deux groupes d'ailettes (31, 32) sont espacés l'un de l'autre pour la réception des extrémités d'enroulement (41) des enroulements (28) du stator (14).

3. Ventilateur de refroidissement (1) selon la revendication 1 ou 2, **caractérisé par le fait qu'**un groupe d'ailettes (31) est disposé à proximité de l'axe de guidage (18) et que les ailettes (31) sont coudées dans le sens inverse du sens de rotation (33).

4. Ventilateur de refroidissement (1) selon l'une des revendications 1 à 3, **caractérisé par le fait que** l'autre groupe d'ailettes (32) est disposé sur la circonférence du moyeu (36) et que les ailettes sont droites.

5. Ventilateur de refroidissement (1) selon l'une des revendications 1 à 4, **caractérisé par le fait que** le rotor intérieur (3) présente une ouverture de guidage (21) destinée à recevoir l'axe de guidage (18) et que l'axe de guidage (18) est logé dans un flasque arrière (8) d'un boîtier (7).

6. Ventilateur de refroidissement (1) selon l'une des revendications 1 à 4, **caractérisé par le fait que** l'axe de guidage (18) est logé dans ou sur le rotor intérieur (3) et est déterminé dans un boîtier (7).

7. Ventilateur de refroidissement (1) selon l'une des revendications 1 à 4, **caractérisé par le fait que** l'axe de guidage (18) est logé dans ou sur le moyeu de ventilateur (5) et est fixé dans un boîtier (7).

8. Ventilateur de refroidissement (1) selon l'une des revendications 5 à 7, **caractérisé par le fait que** deux roulements à billes (17), un roulement à billes et un palier lisse ou deux paliers lisses sont utilisés pour loger l'axe de guidage (18).
